# EUROPÄISCHE PATENTSCHRIFT

(11) **EP 2 042 751 B1**
(45) Veröffentlichungstag und Bekanntmachung des Hinweises auf die Patenterteilung: **05.06.2013**
(21) Anmeldenummer: 08014311.8
(22) Anmeldetag: 11.08.2008
(51) Int. Cl.: F16B 19/08

(54) **Verfahren zur Anbringung eines Funktionselements an ein Blechteil sowie Zusammenbauteil**
Method for installing a function element onto a piece of sheet metal and assembly
Procédé d'application d'un élément de fonction sur une pièce en tôle et composant d'ensemble

(30) Priorität: 28.09.2007 DE 102007046525
(43) Veröffentlichungstag der Anmeldung: 01.04.2009
(73) Patentinhaber: Profil Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(56) Entgegenhaltungen:
- US-A- 3 405 436
- US-A- 4 724 610

## Beschreibung

Die vorliegende Erfindung betrifft ein Verfahren zur Anbringung eines Funktionselements an ein Blechteil, wobei das Funktionselement einen Kopfteil mit einer Blechauflagefläche sowie einen von der Blechanlagefläche wegragenden Einstanz- bzw. Einpressabschnitt aufweist und sich nach der Anbringung an das Blechteil in einer Sicke des Blechteils befindet, so dass das freie Ende des Einpressabschnitts vorzugsweise nicht über die sich außerhalb der Sicke befindlichen und dem Kopfteil abgewandten Seite des Blechteils hinausragt, wobei mittels einer Matrize Blechmaterial mindestens auf zwei einander gegenüberliegenden Seiten des Einpressabschnitts dadurch verstemmt wird, das es in benachbarten Hinterschneidungen des Einpressabschnitts eingeformt wird.

Ein Verfahren dieser Art ist an sich bekannt, beispielsweise zur Anbringung der so genannten UM-Einpressmutter der Fa. Profil Verbindungstechnik GmbH & Co. KG an ein Blechteil. Bei diesem bekannten Verfahren wird in einem ersten Schritt in einem ersten Werkzeug das Blechteil durch Einpressung der Sicke in das Blechteil für die Aufnahme der rechteckigen Einpressmutter vorbereitet, wobei die Sicke üblicherweise in Draufsicht eine kreisrunde Form aufweist mit einer planaren Bodenfläche, die über eine schräg gestellte umlaufende Wand in das umliegende Blechteil übergeht. Nach Anfertigung der Sicke wird dann die Einpressmutter in einem zweiten Schritt in einem zweiten Werkzeug an das Blechteil angebracht, dadurch, dass der Einpressabschnitt von der erhabenen Seite der Sicke kommend selbststanzend durch das Blechteil hindurch gedrückt wird, das auf einer entsprechenden Matrize im Bereich der Sicke abgestützt wird. Diese Matrize staucht das Blechteil auf zwei gegenüberliegenden Seiten des Einpressabschnitts so, dass Blechmaterial in den entsprechenden Hinterschneidungen des Einpressabschnitts benachbart zur Blechaufnahmefläche einpresst wird, wodurch das Element auspresssicher im Blechteil gehalten wird.

Die Sicke weist eine axiale Tiefe entsprechend der axialen Länge des Einpressabschnitts auf, so dass sich die Blechauflagefläche des Kopfteils des Funktionselements an der planaren erhobenen Seite der Sicke befindet und der Einpressabschnitt durch das Stanzloch hindurch und in die Vertiefung der Sicke des Blechteils hinein erstreckt, jedoch nicht über die dem Kopfteil abgewandten Seite des umliegenden Blechteils hinausragt, sondern vorzugsweise mit dieser in etwa bündig liegt oder gegenüber dieser Seite leicht zurückversetzt ist. Das bedeutet, dass, wenn ein zweites Bauteil an dem Blechteil durch eine Schraube befestigt wird, die durch das weitere Bauteil in das Gewinde der Einpressmutter eingeschraubt wird, das zweite Bauteil flächenbündig mit dem ersten Blechteil liegt. Das freie Ende des Einpressabschnitts liegt wenigstens beim Anziehen der Schraube an dem zweiten Bauteil an, wodurch eine hochwertige Schraubverbindung entsteht.

Solche rechteckigen Muttern werden aus mehreren Gründen gerne verwendet, beispielsweise weil sie nicht sehr hoch bauen, d.h. in der Gesamthöhe relativ niedrig sind und weil sie preisgünstig herstellbar und daher in der Anschaffung kostengünstiger sind.

Problematisch bei der bisherigen Vorgehensweise, bei der das Element in einer Sicke angebracht ist, ist der Aufwand, der mit der Herstellung der Sicke einhergeht.

US 3,405,436 A lehrt eine Vorrichtung zum Anbringen einer rechteckigen Mutter in ein vorgestanztes Blechteil.

US 4,724,610 A offenbart eine Vorrichtung zum Anbringen einer rechteckigen Mutter in ein vorgeformtes Blechteil.

Aufgabe der vorliegenden Erfindung ist es daher, ein Verfahren der eingangs genannten Art so zu gestalten, dass der Aufwand für die Herstellung der Sicke gegenüber dem bisherigen Verfahren deutlich herabgesetzt wird.

Zur Lösung dieser Aufgabe wird ein Verfahren gemäß Anspruch 1 vorgeschlagen.

Der Vorteil der Erfindung ist daher darin zu sehen, dass anstatt zwei verschiedene Werkzeuge zur Herstellung der Sicke und zur Anbringung des Funktionselements an das Blechteil im Bereich der Sicke verwenden zu müssen, wobei diese zwei verschiedenen Werkzeuge entweder in getrennten Presseinrichtungen oder in zwei einander folgenden Stufen eines Folgeverbundwerkzeugs vorgesehen waren, erfindungsgemäß das Element erst in das Blechteil eingestanzt wird und im gleichen Hub der Einpresseinrichtung bzw. der Einstanzeinrichtung die Sicke anschließend geformt wird. Dies führt nicht nur dazu, dass die Ausbildung der Sicke und die Anbringung des Elements in einer Operation durchgeführt werden, sondern dass der Aufwand für die Werkzeuge insgesamt herabgesetzt wird.

Zwar müssen die Werkzeuge für die Anbringung des Funktionselements an das Blechteil und für die Ausbildung der Sicke eventuell eine etwas kompliziertere Form aufweisen als wenn sie nur die jeweils eine Funktion ausüben müssten, insgesamt sind die Werkzeugkosten aber deutlich geringer, da man es mit einem Werkzeugsatz anstatt mit zwei Werkzeugsätzen zu tun hat.

Besonders bevorzugte Ausführungsformen des erfindungsgemäßen Verfahrens bzw. des durch das Verfahren entstehende Zusammenbauteil sind den Unteransprüchen zu entnehmen.

Die Erfindung wird nachfolgend anhand der Zeichnungen näher erläutert, in diesen zeigen:

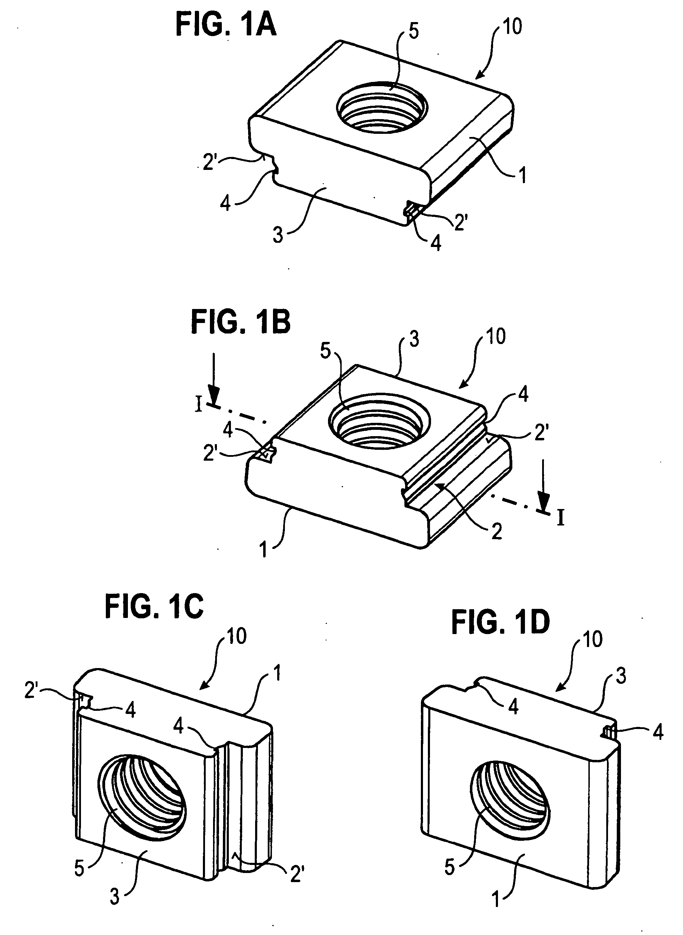

- Fig. 1A-D: vier perspektivische Darstellungen eines an sich bekannten rechteckigen selbststanzenden Funktionselements in Form einer so genannten UM-Einpressmutter erhältlich von der Firma Profil-Verbindungstechnik GmbH & Co. KG, wobei die Fig. 1A eine Darstellung von oben und von der linken Seite auf der Oberseite des Kopfteils des Funktionselementes, die Fig. 1B eine Darstellung von unten und von der rechten Seite auf der Unterseite des Kopfteils des Funktionselements, die Fig. 1C eine Darstellung von unten und auf der linken Schmalseite des Funktionselements und die Fig. 1D eine Darstellung von oben und auf der rechten Schmalseite des Funktionselements zeigt,
- Fig. 2: die Ausgangsposition bei der Anbringung einer Einpressmutter gemäß den Fig. 1A-D an ein Blechteil unter Anwendung eines teilweise in axialer Ebene geschnittenen Setzkopfs und einer in Seitenansicht und axialer Halbschnittgezeigten Matri- ze, der bzw. die ausgelegt sind, um das erfindungsgemäße Verfahren durchzuführen,
- Fig. 3: die Vorrichtung gemäß Fig. 2 zu einem Zeitpunkt, wenn das Blechteil gerade zwischen der Matrize und dem Setzkopf am Anfang des Einstanzvorgangs geklemmt ist,
- Fig. 4: eine Darstellung ähnlich der Fig. 3, jedoch in einem fortgeschrittenen Stadium des Einstanzvorgangs kurz vor dem Herausstanzen des Stanzbutzens,
- Fig. 5: wiederum die gleiche Vorrichtung wie Fig. 4, jedoch gerade am Ende des Stanzvorgangs und
- Fig. 6: die gleiche Vorrichtung wie die bisherigen Figuren 2 bis 5, jedoch hier nach der fertigen Einstanzung der Einpressmutter in das Blechteil.

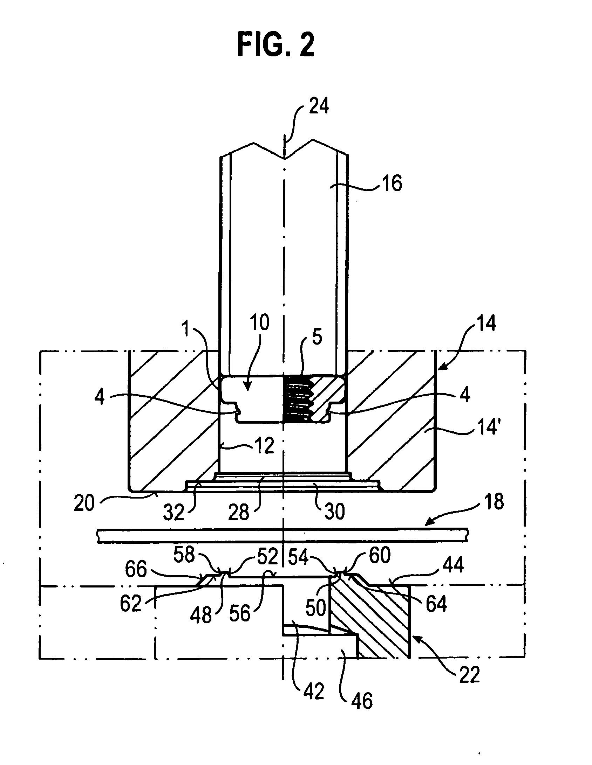

Bezug nehmend auf die Fig. 1A bis 1D und 2 wird mit 10 ein Funktionselement in Form einer rechteckigen UM-Einpressmutter gezeigt. Das Funktionselement 10 weist einen Kopfteil 1 mit zwei länglichen Flächenbereichen 2', die gemeinsam die Blechauflagefläche 2 bilden (d.h. die Blechauflagefläche 2 ist durch die zwei streifenartige Teilflächen 2' gebildet) sowie einen von der Blechanlagefläche wegragenden Einstanz- bzw. Einpressabschnitt 3 auf. Wie aus den Fig. 1A bis 1D ersichtlich ist, handelt es sich bei dem Funktionselement 10 um ein in Draufsicht rechteckiges oder quadratisches Element mit einem in Stirnansicht ebenfalls rechteckigen (hier quadratischen) Stanzabschnitt 3, der von der Seite der Blechauflagefläche 2 des Kopfteils 1 von diesem wegragt und auf zwei entgegengesetzten Seiten Hinterschneidungen 4 aufweist, in die Blechmaterial durch entsprechende Nasen einer später zu beschreibenden Matrize eingedrückt wird, um ein Auspressen des in das Blechteil eingestanzten Funktionselements aus dem Blechteil heraus zu verhindern. Die Einpressmutter kann in an sich bekannter Weise kostengünstig aus einem entsprechenden länglichen Profil hergestellt werden, d.h. ein Profil mit einem Querschnitt entsprechend der Schnittebene I-I in Fig. 1B. Die Einpressmutter 10 ist hier bereits mit einem mittleren Gewinde 5 versehen. Dies ist nicht zwingend erforderlich. Statt mit einem Gewinde, könnte das Funktionselement mit einer glatten Zylinderbohrung zur Aufnahme einer Welle oder eines Stifts oder einer eine Gewinde schneidenden oder formenden Schraube versehen werden.

Gemäß Fig. 2 befindet sich das Funktionselement 10 in Form einer Einpressmutter in einem Stempelkanal 12 eines Setzkopfes 14, und es kann mit einem Stempel 16 nach unten durch den Stempelkanal 12 gedrückt werden. Der Stempelkanal 12 hat die gleiche Querschnittsform wie das Kopfteil 1 der rechteckigen Einpressmutter, ist aber so bemessen, dass die Einpressmutter ohne weiteres mittels des Stempels durch den Stempelkanal 12 hindurchgedrückt werden kann. In an sich bekannter Weise können Elemente wie Kunststofffedern (nicht gezeigt) im Stempelkanal 12 vorgesehen werden, die auf die Einpressmutter 10 eine dieses zurückhaltende Kraft ausüben, die erst vom Stempel überwunden werden muss, um die Einpressmutter 10 durch den Stempelkanal 12 hindurch zu bewegen. Dadurch wird sichergestellt, dass die Einpressmutter 10 in Berührung mit dem Stempel bleibt und nicht im freien Fall durch den Stempelkanal hindurch fällt. Da solche Setzköpfe im Stand der Technik bekannt sind, beispielsweise aus der EP 0755749 B2, werden sie hier nicht weiter beschrieben.

Es genügt zu sagen, dass die Einpressmutter üblicherweise durch einen Schlauch oder eine entsprechende Führung zu dem Setzkopf geführt wird und seitlich zwischen Haltelementen eingeschoben wird, die das Element halten, bis sie vom Stempel 16 in den Stempelkanal 12 bzw. durch den Stempelkanal hindurch weiter nach unten befördert werden.

Mit dem Bezugszeichen 18 wird ein Blechteil schematisch dargestellt, das sich zwischen dem freien unteren Ende des Setzkopfes 14 und einer darunter angeordneten Matrize 22 befindet. Die Matrize 22 und der Setzkopf 14 sind koaxial zueinander und zu der mittleren Längsachse 24 der Einpressmutter 10 angeordnet.

Üblicherweise wird der Setzkopf an einem oberen Werkzeug einer Presse oder an einer Zwischenplatte einer Presse befestigt, während sich die Matrize entweder in der Zwischenplatte der Presse bzw. im unteren Werkzeug der Presse befindet. Es können aber auch umgekehrte Anordnungen verwendet werden, bei denen der Setzkopf an der Zwischenplatte der Matrize oder am unteren Werkzeug der Presse befestigt ist und die Matrize dann am oberen Werkzeug der Presse bzw. an der Zwischenplatte angeordnet wird. Auch ist es nicht zwingend erforderlich, dass der Stempelkanal 12 mit Längsachse 24 in senkrechter Richtung angeordnet ist. Durch die Verwendung von Schiebern können auch schräg gestellte Varianten verwendet werden, wenn es darum geht, ein Befestigungselement an einem schräg gestellten Bereich eines Blechteils anzubringen.

Ferner ist es nicht zwingend erforderlich, eine Presse zur Anbringung der Einpressmutter an dem Blechteil zu verwenden, sondern es können beispielsweise Roboter zur Anwendung gelangen, die für den entsprechenden Hub des Setzkopfes gegenüber der Matrize sorgen oder es kann eine Art C-Gestell verwendet werden, wobei die Verwendung von C-Gestellen und Robotern im Stand der Technik an sich bestens bekannt ist und daher hier nicht weiter beschrieben werden muss.

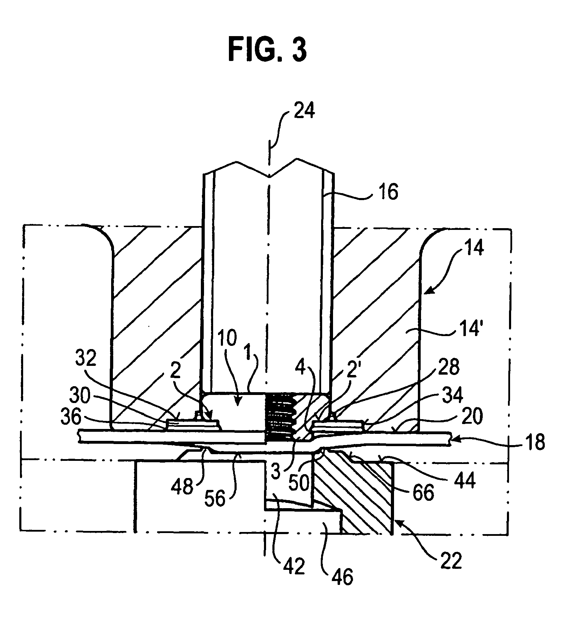

Fig. 3 zeigt dann die Vorrichtung nachdem der Setzkopf so weit nach unten gedrückt ist, dass das Blechteil auf der Einstanzmatrize sitzt und der Stempel 16 gerade angefangen hat, die Einpressmutter 10 selbststanzend in das Blechteil einzustanzen. Im Regelfall ist der Stempel 16 fest an der Zwischenplatte einer Presse oder am oberen Werkzeug der Presse (oder an einem entsprechenden Teil der verwendeten Einpresseinrichtung (nicht gezeigt)) befestigt, während der untere Teil des Setzkopfes 14, d.h. das Nasenstück (auch die untere Platte genannt), das mit dem Bezugszeichen 14' versehen ist, gegenüber der Zwischenplatte bzw. dem oberen Werkzeug der Platte (bzw. dem genannten Teil) durch eine Feder nach unten (in Bezug auf die hier dargestellte Ausrichtung der Vorrichtung) vorgespannt. Dies bedeutet, dass mit zunehmendem Schließen der Presse das Nasenstück 14' gegenüber dem Stempel zunehmend zurück weicht. Dies bedeutet ferner, dass das Nasenstück 14' als Niederhalter funktioniert und in Fig. 3 bereits das Blechteil zwischen sich und die erhabenen Nasen 48, 50 der Matrize 22 geklemmt hat. In der Position gemäß Fig. 3 ist das Nasenstück des Setzkopfs 14 gegenüber dem Stempel bereits so weit nach oben zurückgewichen, dass es sich aus der Position der Fig. 3 nunmehr gemeinsam mit dem Stempel 16 bewegt, d.h. es findet zwischen diesen Teilen 16 und 14 während der weiteren Schließbewegung der Presse keine relative Bewegung mehr statt.

Wie auch gut in Fig.2 zu sehen ist, hat das freie Stirnende 20 des Setkopfes 14 bzw. dessen Nasenstück 14' zwei koaxial angeordnete vertiefte Bereiche 28 und 30, wobei der obere Bereich 28 in Draufsicht eine Form aufweist, die senkrecht zur mittleren Längsachse 24 geringfügig größer bemessen ist als der Kopfteil der Einpressmutter und in Richtung der Längsachse 24 eine Tiefe aufweist, die deutlich kleiner ist als die Höhe des Kopfteils der Einpressmutter zwischen der Blechauflagefläche 2 und dem in der Zeichnung oberen Stirnende des Kopfteils 1. Dieser Bereich 28 bildet einen gewissen Freiraum, der im Stande ist, Blechmaterial aufzunehmen, falls ungünstige Toleranzen vorkommen, die es nötig machen, Blechmaterial unterzubringen, ohne eine fehlerhafte Verbindung zwischen der Einpressmutter und dem Blechteil zu erzeugen. Der Bereich 28 geht über eine sich senkrecht zur Längsachse 24 erstreckende Schulter 32 in den unteren Bereich 30 über, wobei diese Schulter 32 die Bodenfläche des Bereichs 30 bildet. Die Blechauflagefläche 2 des Kopfteils 1 der Einpressmutter ist mit dieser Bodenfläche 32 des unteren vertieften Bereichs 30 in etwa flächenbündig. Dieser vertiefte Bereich 30 ist in Draufsicht kreisrund und seine Umfangswandung 34 geht über einen möglichst sanften Radius 36 in die ebene Stirnseite 20 des Setzkopfs über. Die axiale Tiefe dieses unteren vertieften Bereichs 30 des Setzkopfs 14 entspricht der axialen Höhe der Sicke und in etwa der axialen Höhe des Einpressabschnitts 3 der Einpressmutter 10 zwischen der Blechauflagefläche 2 und der unteren Stirnseite des Einstanzabschnitts 3 abzüglich die Blechdicke und ist vorzugsweise geringfügig größer als diese um etwa 0,2 mm.
Die Matrize 22, auf der das Blechteil 18 abgestützt ist, hat eine mittlere Passage 42, deren Querschnittsform der Querschnittsform des Einpressabschnitts 3 der Einpressmutter 10 entspricht und die im Bereich der Stirnseite 44 der Matrize 22 geringfügig größer ist als die Abmessungen des Einpressabschnitts 3. Unterhalb dieses Bereichs kann sich die mittlere Passage 42 der Matrize etwas erweitern bzw. sie geht in eine erweiterte Passage 46 mit kreisförmigem Querschnitt über, so dass ein durch die Zusammenarbeit des Einpressabschnitts 3 und der Matrize 22 erzeugter Stanzbutzen leicht durch diese mittlere Passage entfernt werden bzw. hindurch fallen kann.

Auf der linken und rechten Seite der mittleren Passage 42 der Matrize 22, die mit der mittleren Längsachse des Stempels bzw. der mittleren Längsachse der Einpressmutter 10 ausgerichtet ist, befinden sich zwei Nasen 48, 50, die senkrecht zur Ebene der Zeichnung stehen und sich über eine Länge erstrecken, die der entsprechenden seitlichen Länge des Einpressabschnitts 3 der Einpressmutter senkrecht zur Zeichnungsebene, d.h. der Länge der Hinterschneidungen 4 entspricht. Diese Nasen 48, 50 gehen auf der axial inneren Seite über jeweilige schräg gestellte Flächen 52, 54 in eine stirnseitige Vertiefung 56 der Matrize 22 über. Die Bodenfläche dieser in Draufsicht rechteckigen Vertiefung, in die die mittlere Passage 42 mündet, steht senkrecht zur Längsachse 24. Auf der radial äußeren Seite der Nasen 48, 50 gehen diese über schräg gestellte Flanken 58, 60 in Flächen 62, 64 über, die senkrecht zur mittleren Längsachse der Anordnung stehen und etwas unterhalb der Oberseiten der Nasen 48, 50 angeordnet sind. Diese Flächen 62, 64 gehen wiederum über eine schräge umlaufende Seitenfläche 66, die in Draufsicht kreisrund ist, in eine weitere Ebene über, die mit dem Bezugszeichen 44 versehen ist und senkrecht zur mittleren Längsachse der Anordnung steht. Die Fläche mit dem Bezugszeichen 44 ist in Draufsicht ebenfalls kreisrund.

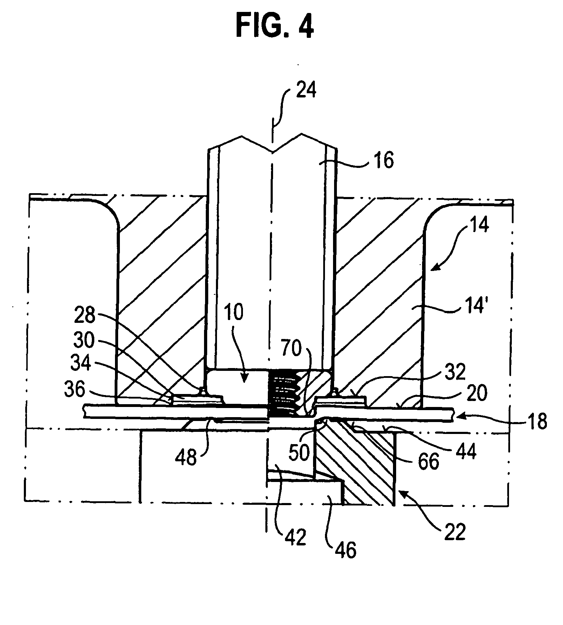

Im weiteren Stadium des Einstanzvorgangs gemäß Fig. 4 sieht man, dass das freie Ende 70 des Einpressabschnitts 3 nunmehr im Wesentlichen durch die gesamte Blechdicke des Blechteils 18 hindurchgepresst worden ist, was durch weiteres Schließen der Presse und durch die entsprechende nach unten berichtete Bewegung des Setzkopfes 14 mit dem Stempel gegenüber der Position gemäß Fig. 3 erreicht ist. Man sieht außerdem, dass das Blechteil 18 jetzt über die Nasen 48, 50 gebogen ist, so dass das Blechteil im vertieften Bereich 30 des Setzkopfes nicht ganz so schräg steht wie bei der Darstelldung der Fig. 3.

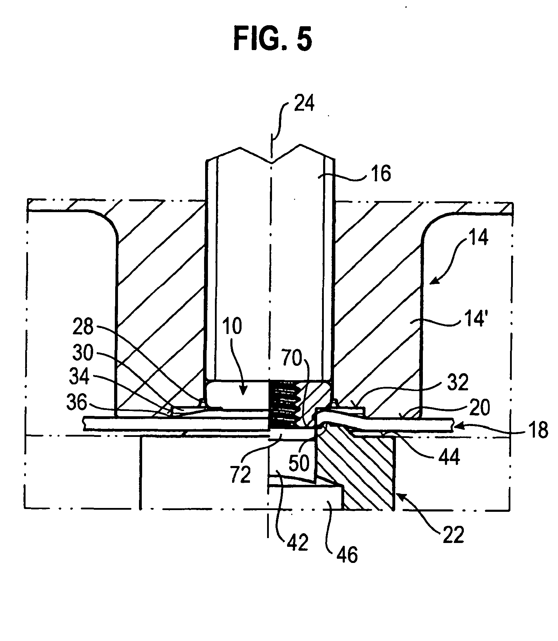

Bei noch weiterem Schließen der Presse und entsprechend nach unter erfolgter Bewegung des Setzkopfes 14 und des Stempels 16 wird dann das Stadium gemäß Fig. 5 erreicht, bei dem ein Stanzbutzen 72, der eine Draufsichtsform entsprechend der rechteckigen bzw. quadratischen Draufsichtsform des Einpressabschnitts 3 der Einpressmutter 10 aufweist, gerade vom Blechteil 18 getrennt ist und dieses unter der Einwirkung der Nasen 48, 50 sowie der Flächen 62, 64 bzw. der Kanten der Flächen 62, 64 mit den Seitenflächen 66, 68 teilweise in den vertieften Bereich 30 des Setzkopfes 14 hineingedrückt und gleichzeitig radial innerhalb der Nasen 48, 50 nach unten gebogen ist, und zwar aufgrund der Kräfte, die vom Stempel 16 auf die Einpressmutter 10 und von dieser auf das Blechteil 18 ausgeübt werden.

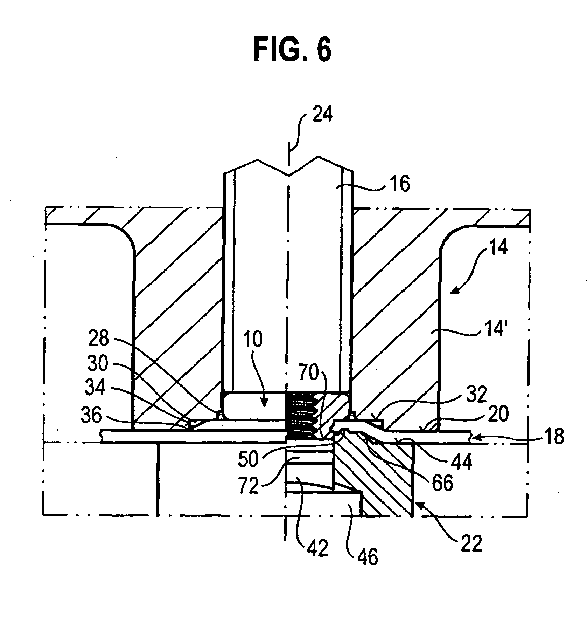

Schließlich schließt die Presse noch weiter, so dass der Setzkopf 14 mit dem Stempel 16 gegenüber der Matrize 22 die Position annimmt, die in Fig. 6 gezeigt ist.

Man merkt jetzt, dass die Nasen 48, 50 vollständig in das Blechmaterial hineingedrückt worden sind, wodurch dieses in die Hinterschneidungen 4 links und rechts des Einpressabschnitts 3 der Einpressmutter hinein verformt ist, so dass die Einpressmutter auspresssicher am Blechteil 18 gehalten ist. Ferner sieht man, dass das Blechteil 18 zwischen den Nasen 48, 50 und den Streifenbereichen 2' der Blechauflagefläche 2 und zwischen den ebenen Flächen 62, 64 der Matrize und der Bodenfläche 32 des vertieften Bereichs 30 des Setzkopfs 14 und zwischen der Stirnseite 20 des Nasenstücks des Setzkopfes 14 und der Stirnseite 44 der Matrize 22 geklemmt ist und daher zu einer kreisförmigen Sicke 76 ausgebildet ist. Die Sicke weist eine planare Fläche auf, auf der der Kopfteil der Einpressmutter mit seiner Blechauflagefläche 2 sitzt. Die kreisförmige Umrandung der Sicke ist durch den umlaufenden, in Draufsicht kreisförmigen schräg gestellten Blechbereich 74 gebildet, der sich innerhalb der unteren Vertiefung 30 des Nasenstücks des Setzkopfes 14 zwischen der umlaufenden schrägen Seitenfläche 66 der Matrize und der umlaufenden Ecke, die zwischen der Bodenfläche 32 und der Umfangswand 34 mit dem Radius 36 ausgebildet ist, befindet.

Durch das Zusammenarbeiten der flachen Stirnseite 20 des Setzkopfes 14 mit der flachen Stirnseite 44 der Matrize ist das Blechteil radial außerhalb der Sicke flach gepresst, d.h. irgendwelche Verwerfungen des Blechteils, die sich durch die Einstanzung der Einpressmutter 10 in das Blechteil 18 ergeben haben, werden im geschlossenen Zustand der Presse ausnivelliert, so das das Blechteil radial außerhalb der Sicke einen ebenen Verlauf hat.

Man sieht auch aus Fig. 6 wie der Stanzbutzen durch die mittlere Passage 42, 46 der Matrize mittels Schwerkraft entsorgt werden kann.

Durch Öffnen der Presse kann nunmehr das Blechteil 18 mit der eingestanzten Einpressmutter 10, wie in Fig. 6 dargestellt, aus der Presse entfernt werden. Es kann eine neue Einpressmutter an einen neuen Blechteil durch Wiederholung des Verfahrens angebracht werden.

Der vertiefte Bereich 56 innerhalb der Nasen 48, 50 der Matrize bildet einen Ausdehnungsraum für Blechmaterial und kann mehr oder weniger gefüllt werden, je nach dem, welche Toleranzen sich bei dem Blechteil bzw. bei den Einpressmuttern ergeben.

Bei allen Ausführungsformen können als Beispiel für den Werkstoff der Einpressmutter alle Materialien genannt werden, die im Rahmen der Kaltverformung die Festigungswerte der Klasse 8 gemäß ISO-Standard oder höher erreichen, beispielsweise eine 35B2-Legierung gemäß der alten Norm DIN 1654 oder einem Werkstoff gemäß DIN EN 20898 Teil 2. Die so gebildeten Einpressmuttern eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für das Profil bzw. die Einpressmutter benutzt werden, z.B. AlMg5. Auch kommen Profile bzw. Funktionselemente aus höherfesten Magnesiumlegierungen wie beispielsweise AM50 in Frage.

## Patentansprüche

1. Verfahren zur Anbringung eines Funktionselements (10) an ein Blechteil (18) in einer Vorrichtung, wobei die Vorrichtung einen Setzkopf (14) und eine Matrize (22) umfasst, wobei das Funktionselement (10) einen Kopfteil (1) mit einer Blechauflagefläche (2) sowie einen von der Blechanlagefläche wegragenden Einstanz- bzw. Einpressabschnitt (3) aufweist, sich nach der Anbringung an das Blechteil (18) in einer Sicke (76) des Blechteils befindet, so dass das freie Ende des Einpressabschnitts (3) nicht über die sich außerhalb der Sicke (76) befindlichen und dem Kopfteil abgewandten Seite des Blechteils (18) hinausragt, wobei mittels der Matrize (22) Blechmaterial mindestens auf zwei einander gegenüberliegenden Seiten des Einpressabschnitts dadurch verstemmt wird, das es in benachbarten Hinterschneidungen (4) des Einpressabschnitts (3) eingeformt wird,
**dadurch gekennzeichnet,**
**dass** der Setzkopf (14), der das Funktionselement (10) aufnimmt und in das Blechteil (18) einstanzt, im Bereich seiner dem Blechteil (18) zugewandten Stirnseite (20) eine Vertiefung (30) mit einer Gestalt entsprechend der Gestalt der Sicke (76) aufweist, beispielsweise eine kreisrunde Vertiefung, die eine axiale Tiefe entsprechend der gewünschten axialen Höhe der Sicke (76) aufweist, und
**dass** das Blechteil (18) mittels der Matrize (22) zur Ausbildung der Sicke (76) in diese Vertiefung (80) eingeformt wird, während das Funktionselement an das Blechteil angebracht wird, und
**dass** der Einstanz- bzw. Einpressabschnitt (3) des Funktionselements (10) in einem Hub einer Einpresseinrichtung in das Blechteil (18) eingestanzt wird und die Sicke (76) erst während der Durchstanzung des Blechteils (18) durch das Funktionselement im weiteren Verlauf des gleichen Hubs der Einpresseinrichtung angefertigt bzw. fertig gestellt wird.

2. Verfahren nach Anspruch 1,
**dadurch gekennzeichnet,**
**dass** es sich bei dem Funktionselement (10) um ein in Draufsicht rechteckiges oder quadratisches Element handelt mit einem ebenfalls rechteckigen oder quadratischen Stanzabschnitt (3), der von der Seite der Blechauflagefläche (2) des Kopfteils (1) von diesem wegragt und auf diesen zwei entgegengesetzten Seiten Hinterschneidungen (4) aufweist, in die Blechmaterial durch entsprechende Nasen (48, 50) der Matrize (22) eingedrückt wird, um ein Auspressen des in das Blechteil (18) eingestanzten Funktionselements (10) aus dem Blechteil (18) heraus zu verhindern.

3. Verfahren nach Anspruch 1 oder Anspruch 2,
**dadurch gekennzeichnet,**
**dass** der Setzkopf (14), der zum Einstanzen des Funktionselements (10)
und zur Ausbildung der Sicke (76) verwendet wird, ein Nasenstück (14'), die über eine Feder an einem Presskraft übertragenden Teil angeschlossen ist, sowie einen Stempel (16), der unmittelbar am genannten Teil angebracht ist, aufweist, wobei die Stärke der Feder ausgelegt ist, um das Nasenstück (14') gegenüber dem Stempel so lange zurückweichen zu lassen bis das Funktionselement (10) in Berührung mit dem Blechteil geraten ist und erst dann mit dem Stempel (16) zu bewegen, um das Funktionselement (10) in das Blechteil einzustanzen und gleichzeitig mit bzw. im Anschluss an der Durchstanzung des Blechteils die Sicke (76) auszubilden.

## Claims

1. A method of attaching a functional element (10) to a sheet metal part (18) in an apparatus, wherein the apparatus includes a setting head (14) and a die button (22), wherein the functional element (10) has a head part (1) having a sheet metal contact surface (2) as well as a punching section or pressing section (3) projecting away from the sheet metal contact surface and is located in a bead (76) of the sheet metal part after the attachment to the sheet metal part (18) so that the free end of the pressing section (3) does not project beyond the side of the metal sheet metal part (18) located outside the bead (76) and remote from the head part, wherein sheet metal material is caulked at at least two mutually oppositely disposed sides of the pressing section by means of the die button (22) in that said sheet metal material is moulded into adjacent undercuts (4) of the pressing section (3),
**characterised in that**
the setting head (14) which receives the functional element (10) and punches it into the sheet metal part (18) has a recess (30) in the region of its end face (20) facing the sheet metal part (18), said recess having a design corresponding to the design of the bead (76), for example a circular recess, which has an axial depth corresponding to the desired axial height of the bead (76); and **in that** the sheet metal part (18) is moulded into the recess (80) by means of the die button (22) for forming the bead (76) while the functional element is attached to the sheet metal part; and
**in that** the punching section or pressing section (3) of the functional element (10) is punched in one stroke of a pressing device into the sheet metal part (18) and the bead (76) is only fabricated or completed during the punching through of the sheet metal part (18) by the functional element in the further course of the same stroke of the pressing device.

2. A method in accordance with claim 1,
**characterised in that**
the functional element (10) is an element which is rectangular or square in plan view and has a likewise rectangular or square punching section (3) which projects away from the head part (1) from the side of the sheet metal contact surface (2) of the head part (1) and has undercuts (4) on these two opposite sides into which the sheet metal material is pressed by corresponding noses (48, 50) of the die button (22) to prevent a pressing of the functional element (10), which is punched into the sheet metal part (18), out of the sheet metal part (18).

3. A method in accordance with claim 1 or claim 2,
**characterised in that**
the setting head (14), which is used for punching the functional element (10) and for forming the bead (76), has a nose piece (14') which is connected via a spring to a part transmitting a pressing force and has a plunger (16) which is directly attached to the said part, with the strength of the spring being configured to allow the nose piece (14') to escape back with respect to the plunger for so long until the functional element (10) has come into contact with the sheet metal part and only then to move with the plunger (16) to punch the functional element (10) into the sheet metal part and to form the bead (76) simultaneously with or subsequently to the punching through of the sheet metal part.

## Revendications

1. Procédé pour le montage d'un élément fonctionnel (10) sur une pièce en tôle (18) dans un dispositif, ledit dispositif comprenant une tête de pose (14) et une matrice (22), et l'élément fonctionnel (10) comprenant une partie de tête (1) avec une surface d'appui sur tôle (2) ainsi qu'un tronçon à poinçonner ou à enfoncer (3) en saillie en éloignement de la surface d'appui sur tôle, l'élément fonctionnel se trouvant, après le montage sur la pièce en tôle (18), dans une moulure (76) de la pièce en tôle, de sorte que l'extrémité libre du tronçon à enfoncer (3) ne dépasse pas au-delà du côté de la pièce en tôle (18) situé à l'extérieur de la moulure (76) et détourné de la partie de tête, dans lequel le matériau de la tôle est maté au moyen de la matrice (22) au moins sur deux côtés mutuellement opposés du tronçon à enfoncer du fait qu'il est amené à se déformer en pénétrant dans des contre-dépouilles voisines (4) du tronçon à enfoncer (3),
**caractérisé en ce que**
la tête de pose (14), qui reçoit l'élément fonctionnel (10) et l'amène à poinçonner dans la pièce en tôle (18), comporte dans la région de sa face frontale (20) tournée vers la pièce en tôle (18) un renfoncement (30) avec une configuration correspondant à la configuration de la moulure (76), par exemple un renfoncement circulaire, qui présente une profondeur axiale correspondant à la hauteur axiale souhaitée de la moulure (76), et
**en ce que** la pièce en tôle (18) est amenée au moyen de la matrice (22) à se déformer en pénétrant dans ce renfoncement (80) afin de réaliser la moulure (76), pendant que l'élément fonctionnel est monté sur la pièce en tôle, et
**en ce que** le tronçon à poinçonner ou à enfoncer (3) de l'élément fonctionnel (10) est poinçonné dans la pièce en tôle (18) dans une course d'un système d'enfoncement, et la moulure (76) est réalisée ou finie uniquement pendant le poinçonnage de la pièce en tôle (18) par l'élément fonctionnel dans la poursuite de la même course du système d'enfoncement.

2. Procédé selon la revendication 1,
**caractérisé en ce que** l'élément fonctionnel (10) est un élément rectangulaire ou carré en vue de dessus, avec un tronçon à poinçonner (3) également rectangulaire ou carré, qui dépasse en éloignement de la partie de tête (1) depuis le côté de la surface d'appui sur tôle (2) de la partie de tête (1) et comporte sur ses deux côtés mutuellement opposés des contre-dépouilles (4) dans lesquelles le matériau de la tôle est enfoncé par des ergots correspondants (48, 50) de la matrice (22), afin d'empêcher de chasser par pression hors de la pièce en tôle (18) l'élément fonctionnel (10) poinçonné dans la pièce en tôle (18).

3. Procédé selon la revendication 1 ou 2,
**caractérisé en ce que** la tête de pose (14), qui est utilisée pour poinçonner l'élément fonctionnel (10) et pour réaliser la moulure (76), comprend une pièce formant ergot (14'), qui est raccordée via un ressort à une pièce qui transmet une force de pression, ainsi qu'un poussoir (16) qui est monté directement sur la pièce précitée, et la force du ressort est conçue pour laisser la pièce formant ergot (14') s'effacer par rapport au poussoir aussi longtemps jusqu'à ce que l'élément fonctionnel (10) soit venu en contact avec la pièce en tôle et se déplace uniquement ensuite avec le poinçon (16), afin de poinçonner l'élément fonctionnel (10) dans la pièce en tôle et de réaliser la moulure (76) simultanément avec le poinçonnage de la pièce en tôle ou respectivement à la suite de celui-ci.
